# EUROPEAN PATENT APPLICATION

(11) **EP 4 574 580 A1**
(43) Date of publication of application: **25.06.2025**
(21) Application number: 23869743.7
(22) Date of filing: 16.06.2023
(51) Int. Cl.: B60R 21/231, B60R 21/233, B60R 21/2338

(54) **AIRBAG AND VEHICLE**

(30) Priority: 30.09.2022 CN 202222623206 U
(71) Applicant: Autoliv Development AB, 44783 Vargarda (SE)
(72) Inventor: MENG, Qiang, Shanghai 201807 (CN); YANG, Qunyin, Shanghai 201807 (CN); WU, Jingjing, Shanghai 201807 (CN); LIU, Ke, Shanghai 201807 (CN); DING, Hui, Shanghai 201807 (CN); WANG, Ting, Shanghai 201807 (CN)
(74) Representative: Feucker, Max Martin
(86) International application number: PCT/CN2023/100604
(87) International publication number: WO 2024/066494

(57) **Abstract**

An airbag (10), configured to be mounted at the top of a vehicle, comprising an air bag having an expanded state and a stored state. The air bag comprises a first air bag (11) and a second air bag (12), configured to be in fluid communication with each other. When in the expanded state, the first air bag extends in a front-back direction, and the second air bag, starting from the first air bag, extends in a manner first away from and then toward the first air bag, thereby overall forming a hook shape and having a free end. The second air bag is provided with a recessed portion on a first side face (12A) of the free end facing an occupant. A cushioning space (13) is formed between the first air bag and the second air bag, and the cushioning space and the recessed portion are located on two opposite sides of the free end in the front-back direction. Also provided is a vehicle comprising the airbag. The air bag of the airbag is less likely to damage a windshield during expansion, thereby reducing the likelihood of additional danger caused to an occupant in the vehicle. The volume of the air bag, in particular the second air bag, is relatively small, thereby also reducing production costs.

## Description

### TECHNICAL FIELD

The present invention relates to a safety apparatus in a vehicle. In particular, the present invention relates to an airbag, and further to a vehicle comprising the airbag.

### BACKGROUND ART

Airbags are widely used in existing vehicles as safety apparatuses to protect occupants. Airbags include, for example, airbags disposed in steering wheels, airbags disposed in dashboards, and overhead airbags disposed at the top of a vehicle. When a vehicle is collided with or impacted, a gas generator of the airbag receives a signal transmitted by means of a wire harness connected to the gas generator, thus bringing about a burst. Then, gas generated from the burst rapidly inflates a folded air bag of the airbag, and the inflated air bag expands to protect an occupant from injury resulting from the impact.

However, in order to provide sufficient protection for the occupant in the event of, for example, a collision, the air bag has a high internal air pressure after expansion. The air bag having too high an air pressure is likely to damage a windshield, posing an additional risk to the occupant of the vehicle. At the same time, it is desirable that the costs of the air bag are low.

Therefore, there is a desire for an airbag having higher safety and lower costs.

### SUMMARY OF THE INVENTION

An object of the present invention is to provide an airbag having higher safety and lower costs.

Provided in an aspect of the present invention is an airbag configured to be mounted at the top of a vehicle, comprising:
An air bag, having an expanded state and a stored state,
The air bag comprising a first air bag and a second air bag configured to be in fluid communication with each other, and when in the expanded state, the first air bag extending in a front-back direction, and the second air bag, starting from the first air bag, extending in a manner first away from and then toward the first air bag, thereby overall forming a hook shape and having a free end;
Wherein,
The second air bag is provided with a recessed portion on a first side face of the free end facing an occupant, a cushioning space is formed between the first air bag and the second air bag, and the cushioning space and the recessed portion are located on two opposite sides of the free end in the front-back direction.

According to an embodiment of the present invention, the second air bag is constructed to be stepped on the first side facing the occupant, and the recessed portion is closer to the occupant than other portions of the second air bag.

According to an embodiment of the present invention, a pull strap is further comprised, the pull strap extends in the front-rear direction, and one end of the pull strap is fixed to the recessed portion.

According to an embodiment of the present invention, the second air bag comprises a downwardly extending portion located below the recessed portion, and the width of the recessed portion is greater than the width of the downwardly extending portion.

According to an embodiment of the present invention, the surface of the recessed portion facing the passenger is made of a first piece of fabric, and the first piece of fabric forms the recessed portion by means of a pulling force from the pull strap fixed thereto.

According to an embodiment of the present invention, the first airbag is constructed to be flat-shaped in the expanded state, and the free end is in contact with the first air bag.

According to an embodiment of the present invention, the second air bag extends starting from one end of the first air bag, and the free end of the second air bag is located between both ends of the first air bag in the front-back direction.

According to an embodiment of the present invention, the thickness direction of the pull strap is arranged along the width direction of the air bag, and the pull strap is so constructed as to form the preset recessed portion on the otherwise flat first side face of the free end by applying pulling force to the first side face.

According to an embodiment of the present invention, a closed space of the air bag is formed by the first piece of fabric and a second piece of fabric being connected to each other.

Provided in another aspect of the present invention is a vehicle, wherein the vehicle comprises the airbag according to any of the aforementioned descriptions, and the airbag is configured to be installed at the top of the vehicle.

### BRIEF DESCRIPTION OF THE DRAWINGS

The features, advantages, and technical effects of exemplary embodiments of the present invention will be described below with reference to the accompanying drawings. In the accompanying drawings, the same reference numbers denote the same elements, where
FIG. 1 schematically illustrates an airbag according to an embodiment of the present invention.
FIG. 2 shows a method for manufacturing the airbag according to an embodiment of the present invention.

### DETAILED DESCRIPTION OF PREFERRED EMBODIMENTS

Preferred embodiments of the airbag and vehicle according to the present invention will be described below with reference to the accompanying drawings. The following detailed description and the accompanying drawings are used to illustratively explain the principles of the present invention. The present invention is not limited to the described preferred embodiments, and various embodiments described in the present invention can be used individually or in any combination. The scope of protection of the present invention is defined by the claims.

In addition, terms for spatial relations (such as "upper", "lower", "left", "right", etc.) are used to describe a relative positional relationship between an element and another element shown in the accompanying drawings. Therefore, the terms for spatial relations may be applied to directions different from the directions shown in the accompanying drawings during use. Obviously, although all of these terms for spatial relations refer to the directions shown in the accompanying drawings for ease of explanation, a person skilled in the art will appreciate that directions different from the directions shown in the drawings may be used.

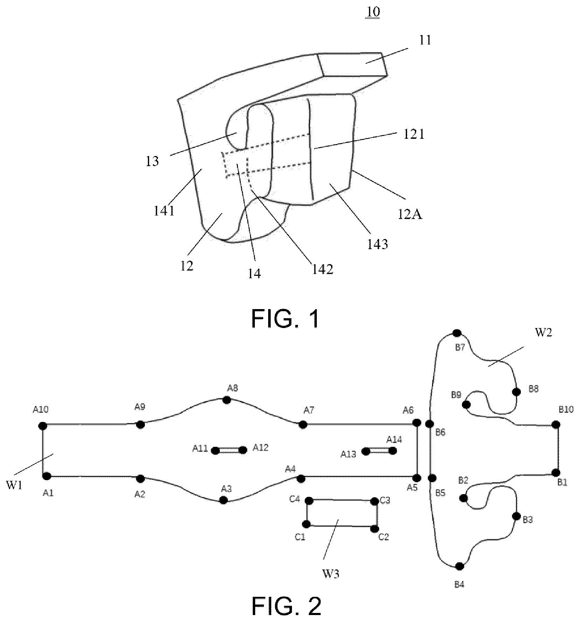

FIG. 1 schematically illustrates an airbag according to an embodiment of the present invention. The airbag according to an embodiment of the present invention is described below with reference to FIG. 1.

As shown in FIG. 1, the airbag 10 provided in the present invention is configured to be mounted at the top of a vehicle, and therefore, may also be referred to as an overhead airbag. The airbag 10 comprises an air bag having an expanded state and a stored state. When the air bag is in the expanded state, the air bag serves to protect a passenger; when the air bag is in the stored state, the air bag is stored in a preset position of the vehicle (e.g., the top of the vehicle). In the airbag 10 of the present invention, the air bag comprises a first air bag 11 and a second air bag 12 configured to be in fluid communication with each other. When in the expanded state, the first air bag 11 extends in a front-back direction. As an embodiment of the present invention, as shown in FIG. 1, the first air bag 11 in the expanded state is constructed to be flat-shaped. It should be noted that the "front-back direction" here refers to the front-back direction of the vehicle, and the "width direction" mentioned hereinafter refers to the width direction of the vehicle. As shown in FIG. 1, the second air bag 12, starting from the first air bag 11, extends in a manner first away from and then toward the first air bag 11, thereby overall forming a hook shape and having a free end. Specifically, in FIG. 1, starting from the left end of the first air bag 11, the second air bag 12 extends downward and then extends upward.

And, as shown in FIG. 1, in the inflated and expanded state, the second air bag 12 is substantially U-shaped. An end of the left side portion of the second air bag 12 is connected to the first air bag 11, and an end of the right side portion of the second air bag 12 is formed as the free end. Further, the second air bag 12 is provided with a recessed portion on a first side face 12A of the free end facing an occupant. A cushioning space 13 is formed between the first air bag 11 and the second air bag 12, and the cushioning space 13 and the recessed portion 121 are located on two opposite sides of the free end in the front-back direction.

**It** can be understood that the cushioning space 13 between the first air bag 11 and the second air bag 12 is embracingly formed by the second air bag 12 extending in a manner first away from and then toward the first air bag 11. When, for example, a collision occurs, the recessed portion 121 serves to accommodate the head of the passenger, and is thus subjected to a forward force applied by the head, and the cushioning space 13 may serve to absorb the forward movement of the recessed portion 121 together with the head of the passenger. Since both the cushioning space and the second air bag serve to absorb impact energy from the head of the passenger, the second air bag of the present invention has a lower internal air pressure after expansion, as compared with a case in which a cushioning space has not been designed, and the position corresponding to the cushioning space is designed as part of the second air bag. As a result, the air bag in the airbag of the present invention is less prone to damage a windshield during expansion, thereby reducing the possibility of additional danger caused to the occupant of the vehicle. At the same time, the volume of the air bag, in particular the second air bag, is relatively small, thereby also reducing the production costs of the air bag.

Therefore, the airbag of the present invention is characterized by higher safety and lower costs.

Moreover, it can be understood that, since the airbag of the present invention is provided with a recessed portion on the first side face 12A of the second air bag, when the vehicle is obliquely collided with at a front surface thereof, i.e., in the event of an oblique collision, the head of the occupant will be confined by the air bag of the airbag without sliding off the air bag. Therefore, the airbag of the present invention also has higher safety in the case of oblique collision.

As an embodiment of the present invention, as shown in FIG. 1, the second air bag 12 is constructed to be stepped on the side facing the occupant. Specifically, the second air bag 12 is substantially U-shaped, and comprises a first portion 141 extending in an up-down direction, a third portion 143 extending in the up-down direction, and a second portion 142 connecting the two, with the free end of the second air bag 12 being located at an end portion of the third portion 143. The second portion 142 is located at a middle position of the first portion 141 in the up-down direction, such that the second air bag 12 has, at a lower end of the first portion 141, a downwardly extending portion located below the recessed portion 121. Moreover, the size of the second portion 142 in the front-back direction of the vehicle dictates the size of the cushioning space 13. Therefore, the size of the cushioning space 13 can be designed by adjusting the size of the second portion 142 in the front-back direction of the vehicle. In addition, the recessed portion 121 (which may also be understood as the third portion 143) is closer to the occupant than other portions (for example, the downwardly extending portion) of the second air bag 12. It can be understood that the downwardly extending portion of the second air bag may serve to protect the chest of the occupant, and the first portion 141 serves to support the third portion 142. The first portion 141 has a larger dimension in the height direction of the vehicle, i.e., the up-down direction in FIG. 1, and can more reliably support the third portion 142. Moreover, in order to more reliably protect the head of the occupant, to prevent the head sliding off the air bag, the width of the recessed portion 121 is designed to be greater than the width of the downwardly extending portion.

As an embodiment of the present invention, as shown in FIG. 1, the airbag 10 further comprises a pull strap 14. When the air bag inflates and expands, the pull strap 14 extends in the front-back direction of the vehicle. One end of the pull strap 14 is fixed to the recessed portion 121, and the other end of the pull strap 14 is fixed to the first portion 141 of the second air bag 12. The thickness direction of the pull strap 14 is configured to be arranged along the width direction of the air bag, and the pull strap 14 is so constructed as to form the preset recessed portion 121 on the otherwise flat first side face 12A of the free end by applying a pulling force to the first side face 12A. In other words, the size of the recessed portion 121 can be simply and conveniently adjusted by means of designing the dimensions, such as length and width, of the pull strap. The surface of the recessed portion 121 facing the passenger is made of a first piece of fabric, and the first piece of fabric forms the recessed portion 121 by means of the pulling force from the pull strap 14 fixed thereto.

As an embodiment of the present invention, the free end may be so configured as to be in contact with the first air bag 11 when the air bag is in an inflated and expanded state, so as to provide some stability to the free end by means of contact between the free end and the first air bag 11. Alternatively, the free end may be so configured as not to be in contact with the first air bag 11 when the air bag is in an inflated and expanded state. Moreover, the free end of the second air bag 12 may be located between both ends of the first air bag 11 in the front-back direction, such that the air bag has an overall compact design. Of course, this is merely exemplary, and the position of the free end of the second air bag relative to the first air bag is not limited thereto.

As an embodiment of the present invention, the air bag, i.e., the first air bag and the second air bag together, is constructed by means of connecting two pieces of fabric, i.e., a first piece of fabric and a second piece of fabric, to each other. Therefore, by means of fabric shape design, only two pieces of fabric are needed to manufacture the air bag of the airbag of the present invention. This simplifies the manufacturing method.

Provided in another aspect of the present invention is a vehicle, the vehicle comprising the airbag according to any of the aforementioned descriptions, and the airbag being configured to be installed at the top of the vehicle.

FIG. 2 shows a method for manufacturing the airbag according to an embodiment of the present invention. The method for manufacturing the airbag according to a first embodiment of the present invention is described below with reference to FIG. 2.

As shown in FIG. 2, three pieces of fabric are provided, i.e., a first piece of fabric W1, a second piece of fabric W2, and a third piece of fabric W3. The first piece of fabric W1 in an unfolded state is so constructed that the width of a middle portion thereof is greater than that of the remaining portions thereof. The middle portion serves to form the first side face 12A on the third portion 143 of the second air bag 12; that is, the middle portion at the same time serves to form the recessed portion 121. The left portion of the first piece of fabric W1 serves to form part of the first air bag 11, the right portion of the first piece of fabric W1 serves to form part of the first portion 141 of the second air bag 12, and in combination with the second piece of fabric W2, the air bag having an enclosed space is formed.

The method for manufacturing the air bag of the airbag of an embodiment of the present invention comprises:
Providing the first piece of fabric W1, sequentially marking ten characteristic points, A1, A2, A3, A4, A5, A6, A7, A8, A9 and A10, along an edge thereof, and marking four characteristic points, A11, A12, A13 and A14, at the middle portion and the right portion of the second piece of fabric W2, respectively;
Providing the second piece of fabric W2, and sequentially marking ten characteristic points, B1, B2, B3, B4, B5, B6, B7, B8, B9 and B10, along an edge thereof;
Providing the third piece of fabric W3, and sequentially marking four characteristic points, C1, C2, C3 and C4, along an edge thereof;
Connecting (for example, by means of stitching or bonding) the edge line A1, A2, A3, A4, A5 and the edge line B1, B2, B3, B4, B5 together;
Connecting (for example, by means of stitching or bonding) the edge line A6, A7, A8, A9, A10 and the edge line B6, B7, B8, B9, B10 together;
Connecting (for example, by means of stitching or bonding) the edge line C1-C4 and the edge line A11-A12 together; and, connecting (for example, by means of stitching or bonding) the edge line C2-C3 and the edge line A14-A13 together.

**It** should be noted that the described method for manufacturing the air bag of the airbag of the present invention is merely exemplary. Those skilled in the art can adjust the order of the steps, or even omit the steps, of the aforementioned method according to actual scenarios, or can use more pieces of fabric to manufacture the air bag of the safety airbag of the present invention.

As described above, although the exemplary embodiments of the present invention have been described with reference to the accompanying drawings in the description, the present invention is not limited to the aforementioned specific embodiments, and the scope of protection of the present invention should be defined by the claims and equivalent meanings thereof.

## Claims

1. An airbag (10), configured to be mounted at the top of a vehicle, comprising:
an air bag, having an expanded state and a stored state,
the air bag comprising a first air bag (11) and a second air bag (12), configured to be in fluid communication with each other, and when in the expanded state, the first air bag (11) extending in a front-back direction, and the second air bag (12), starting from the first air bag (11), extending first away from and then toward the first air bag (11), thereby overall forming a hook shape and having a free end;
**characterized in that**:
the second air bag (12) is provided with a recessed portion (121) on a first side face (12A) of the free end facing an occupant, a cushioning space (13) is formed between the first air bag (11) and the second air bag (12), and the cushioning space (13) and the recessed portion (121) are located on two opposite sides of the free end in the front-back direction.

2. The airbag (10) according to claim 1, wherein the second air bag (12) is constructed to be stepped on the first side facing the occupant, and the recessed portion (121) is closer to the occupant than other portions of the second air bag (12).

3. The airbag (10) according to claim 2, wherein a pull strap (14) is further comprised, the pull strap (14) extends in the front-back direction, and one end of the pull strap (14) is fixed to the recessed portion (121).

4. The airbag (10) according to claim 3, wherein the second air bag (12) comprises a downwardly extending portion located below the recessed portion (121), and the width of the recessed portion (121) is greater than the width of the downwardly extending portion.

5. The airbag (10) according to claim 4, wherein the surface of the recessed portion (121) facing the passenger is made of a first piece of fabric (W1), and the first piece of fabric (W1) forms the recessed portion (121) by means of pulling force from the pull strap (14) fixed thereto.

6. The airbag (10) according to claim 1, wherein the first airbag (11) is constructed to be flat-shaped in the expanded state, and the free end is in contact with the first air bag (11).

7. The airbag (10) according to claim 6, wherein the second air bag (12) extends starting from one end of the first air bag (11), and the free end of the second air bag (12) is located between both ends of the first air bag (11) in the front-back direction.

8. The airbag (10) according to claim 5, wherein the thickness direction of the pull strap (14) is arranged along the width direction of the air bag, and the pull strap (14) is so constructed as to form the preset recessed portion (121) on the otherwise flat first side face (12A) of the free end by applying pulling force to the first side face (12A).

9. The airbag (10) according to claim 5, wherein a closed space of the air bag is formed by the first piece of fabric (W1) and a second piece of fabric (W2) being connected to each other.

10. A vehicle, **characterized in that** the vehicle comprises the airbag (10) according to any one of claims 1 to 9, and the airbag (10) is configured to be mounted at the top of the vehicle.
